(19) Europäisches Patentamt
European Patent Office
Office européen des brevets

(11) **EP 4 270 808 A1**

(12) **EUROPEAN PATENT APPLICATION**

(43) Date of publication:
**01.11.2023 Bulletin 2023/44**

(21) Application number: **22169986.1**

(22) Date of filing: **26.04.2022**

(51) International Patent Classification (IPC):
$H04B\ 7/0404^{(2017.01)}$  $H04B\ 7/08^{(2006.01)}$
$H04B\ 7/06^{(2006.01)}$  $G01S\ 5/02^{(2010.01)}$
$H04L\ 25/02^{(2006.01)}$  $H04W\ 64/00^{(2009.01)}$

(52) Cooperative Patent Classification (CPC):
**H04B 7/0404; G01S 5/02; H04B 7/0691; H04B 7/0874; H04L 25/0212; H04W 64/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **Barbu, Oana-Elena**
  **9000 Aalborg (DK)**
• **Michalopoulos, Diomidis**
  **81541 Munich (DE)**

(74) Representative: **Nokia EPO representatives**
**Nokia Technologies Oy**
**Karakaari 7**
**02610 Espoo (FI)**

(54) **LINE OF SIGHT PROBABILITY DETERMINATION FOR ANTENNA GROUPS OF DEVICES OF MOBILE COMMUNICATION SYSTEMS**

(57) An apparatus, method and computer program in a mobile communications system is described comprising: grouping antennas of a user device of the mobile communications system into one or more antenna groups based on at least one of positioning and network quality of the antennas; determining a common channel response based on received signals observed by a selected antenna group; determining a correlation between received signals observed by one or more other antenna groups and the determined common channel response; based at least partially on the correlation, determining a line-of sight probability of a received signal being in line-of-sight of a network node for the one or more antenna groups, and reconstructing the common channel response.

FIG. 2

**Description**

**Field**

The present specification relates to devices of a mobile communication system having multiple antennas.

**Background**

It is known to have multiple antennas at user devices. There remains a need for improving optimization of usage of antennas at user devices.

**Summary**

In a first aspect, this specification provides an apparatus in a mobile communications system comprising means for performing: grouping antennas of a user device of the mobile communications system into one or more antenna groups based on at least one of positioning and network quality of the antennas; determining a common channel response based on received signals observed by a selected antenna group; determining a correlation (e.g. dependency or relation) between received signals observed by one or more other antenna groups and the determined common channel response; and based at least partially on the correlation, determining a line-of sight probability of a received signal being in line-of-sight of a network node for the one or more antenna groups, and reconstructing the common channel response.

Some examples include means for determining location of the user device based, at least in part, on the determined one or more line-of-sight probabilities.

In some examples, the respective correlation is based, at least in part, on a distance between the selected antenna group and the respective other antenna group.

In some examples, the common channel response corresponds to a superimposed channel observed at the selected antenna group comprising gains for one or more multipath components.

Some examples include means for estimating gain vector of a superimposed channel corresponding to the common channel response using a model, wherein the model combines measurements of received signals observed by the one or more antenna groups.

Some examples include means for iteratively updating the gain vector for a plurality of iterations until a first stability condition is satisfied. Some examples further include means for updating parameters of said model after a first number of iterations of updating the gain vector.

Some examples include means for selecting one or more first antenna groups for determining location of the user device using uplink sounding reference signal positioning and/or for round trip time positioning, wherein the selection is based, at least in part, on the determined line-of-sight probability of the one or more antenna groups.

In some examples, selecting the first antenna group comprises: determining one or more second antenna groups having a line-of-sight probability of above a first threshold probability; determining the one or more third antenna groups from the second antenna groups having channel energy above a second threshold channel energy, wherein the first antenna groups comprise one or more of the third antenna groups.

The means may comprise: at least one processor; and at least one memory including computer program code, the at least one memory and the computer program code configured, with the at least one processor, to cause the performance of the apparatus.

In a second aspect, this specification describes a method comprising: grouping antennas of a user device of the mobile communications system into one or more antenna groups based on at least one of positioning and network quality of the antennas; determining a common channel response based on received signals observed by a selected antenna group; determining a correlation between received signals observed by one or more other antenna groups and the determined common channel response; and based at least partially on the correlation, determining a line-of sight probability of a received signal being in line-of-sight of a network node for the one or more antenna groups, and reconstructing the common channel response.

Some examples include determining location of the user device based, at least in part, on the determined one or more line-of-sight probabilities.

In some examples, the respective correlation is based, at least in part, on a distance between the selected antenna group and the respective other antenna group.

In some examples, the common channel response corresponds to a superimposed channel observed at the selected antenna group comprising gains for one or more multipath components.

Some examples include estimating gain vector of a superimposed channel corresponding to the common channel response using a model, wherein the model combines measurements of received signals observed by the one or more antenna groups.

Some examples include iteratively updating the gain vector for a plurality of iterations until a first stability condition is satisfied. Some examples further include updating parameters of said model after a first number of iterations of updating the gain vector.

Some examples include selecting one or more first antenna groups for determining location of the user device using uplink sounding reference signal positioning and/or for round trip time positioning, wherein the selection is based, at least in part, on the determined line-of-sight probability of the one or more antenna groups.

In some examples, selecting the first antenna group comprises: determining one or more second antenna groups having a line-of-sight probability of above a first threshold probability; determining the one or more third antenna groups from the second antenna groups having channel energy above a second threshold channel energy, wherein the first antenna groups comprise one or more of the third antenna groups.

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: grouping antennas of a user device of the mobile communications system into one or more antenna groups based on at least one of positioning and network quality of the antennas; determining a common channel response based on received signals observed by a selected antenna group; determining a correlation between received signals observed by one or more other antenna groups and the determined common channel response; based at least partially on the correlation, determining a line-of sight probability of a received signal being in line-of-sight of a network node for the one or more antenna groups, and reconstructing the common channel response.

In a sixth aspect, this specification describes a computer-readable medium (such as a non-transitory computer-readable medium) comprising program instructions stored thereon for performing at least the following: grouping antennas of a user device of the mobile communications system into one or more antenna groups based on at least one of positioning and network quality of the antennas; determining a common channel response based on received signals observed by a selected antenna group; determining a correlation between received signals observed by one or more other antenna groups and the determined common channel response; based at least partially on the correlation, determining a line-of sight probability of a received signal being in line-of-sight of a network node for the one or more antenna groups, and reconstructing the common channel response.

In a seventh aspect, this specification describes an apparatus comprising: at least one processor; and at least one memory including computer program code which, when executed by the at least one processor, causes the apparatus to: group antennas of a user device of the mobile communications system into one or more antenna groups based on at least one of positioning and network quality of the antennas; determine a common channel response based on received signals observed by a selected antenna group; determine a correlation between received signals observed by one or more other antenna groups and the determined common channel response; and based at least partially on the correlation, determine a line-of sight probability of a received signal being in line-of-sight of a network node for the one or more antenna groups, and reconstructing the common channel response.

In an eighth aspect, this specification describes an apparatus comprising: a first module configured to group antennas of a user device of the mobile communications system into one or more antenna groups based on at least one of positioning and network quality of the antennas; a second module configured to determine a common channel response based on received signals observed by a selected antenna group; a third module configured to determine a correlation between received signals observed by one or more other antenna groups and the determined common channel response; and a fourth module configured to, based at least partially on the correlation, determine a line-of sight probability of a received signal being in line-of-sight of a network node for the one or more antenna groups, and reconstructing the common channel response.

**Brief description of the drawings**

Example embodiments will now be described, by way of example only, with reference to the following schematic drawings, in which:

FIG. 1 is a block diagram of a system in accordance with an example embodiment;
FIGs. 2 to 5 are flowcharts of algorithms in accordance with example embodiments;
FIGs. 6 to 8 are message sequences of algorithms in accordance with example embodiments;
FIG. 9 is a flowchart of an algorithm in accordance with an example embodiment;
FIG. 10 is a block diagram of components of a system in accordance with an example embodiment; and
FIG. 11 shows an example of tangible media for storing computer-readable code which when run by a computer may perform methods according to example embodiments described above.

**Detailed description**

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

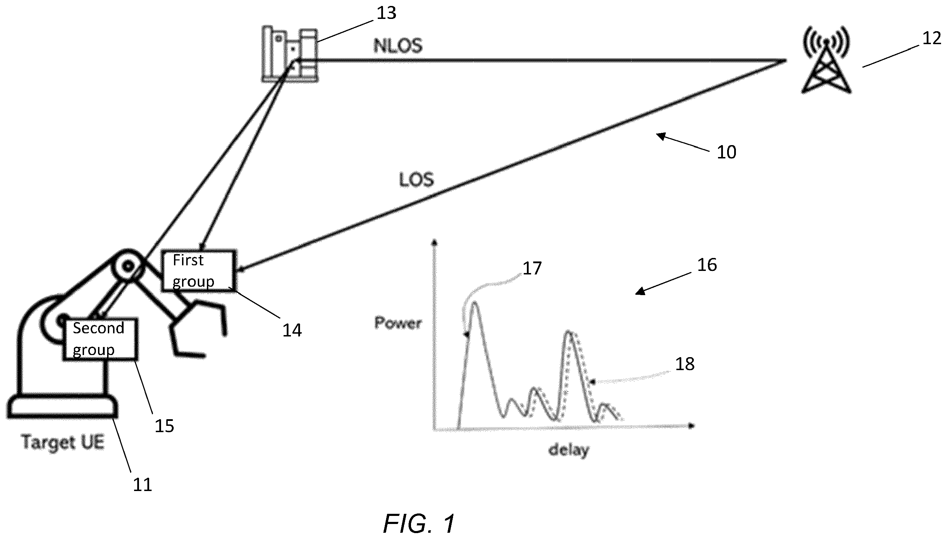

FIG. 1 is a block diagram of a system, indicated generally by the reference numeral 10, in accordance with an example embodiment. System 10 shows a user device 11 comprising a plurality of antennas, such as a first antenna group 14 and a second antenna group 15. The system 10 further shows a network node 12, such as a base station (gNB) or a transmission reception point (TRP), such that the user device 11 may be in communication with the network node 12. As the antenna groups 14 and 15 may be located at different locations on the user device 11, they may experience different channel conditions relative to each other. For example, the first antenna group 14 may be in direct line of sight (LOS) of the network node 12, while the second antenna group 15 maybe in non-line of sight of the network node 12. In some example embodiments, some antennas or antenna groups may be in attenuated line of sight of the network node 12 (e.g. via object(s) 13). Alternatively, or in addition, delay profiles experienced by the antenna groups may be different. For example, some antenna groups may observe delay-profiles of the channel which are shifted in delay domain by a fixed offset, which fixed offset may be proportional to distance(s) between the antenna groups. As such, channel responses observed at different antennas may be different due to the antenna arrangement based on geometrical selectivity.

FIG. 1 further shows a plot 16 showing plots 17 and 18 of delay profiles shown by signal power (vertical axis) with respect to delay (horizontal axis). Line 17 corresponds to the delay profile of the first antenna group 14 and line 18 corresponds to the delay profile of the second antenna group 15. As shown by the dotted line 18, delays of the second antenna group 15 may be a shifted version of the delays of the first antenna group 14 (shown by line 17), such that the shift may be proportional to the distance between the first antenna group 14 and the second antenna group 15.

In some examples, consideration of geometrical selectivity by the user device 11 (e.g. UE) with respect to its antennas (first and second antenna groups 14 and 15) may assist optimization of positioning performance (e.g. by allowing the user device to adjust uplink (UL) sounding reference signals (SRS)). The example embodiments described below provide techniques for determining line of sight (LOS) probability of one or more antennas (or antenna groups). For example, the user device can transmit SRS on the antennas (or group of antennas) with a LOS probability that is at least as much as a given level and omit the transmission over those antenna groups associated with low LOS probability. In some examples, the user device may be able to group its antennas on the basis of their delay profile, allowing thus for an optimized time resolution of timing-based DL positioning methods (such as DL TDoA), explained in further detail in the example embodiments below.

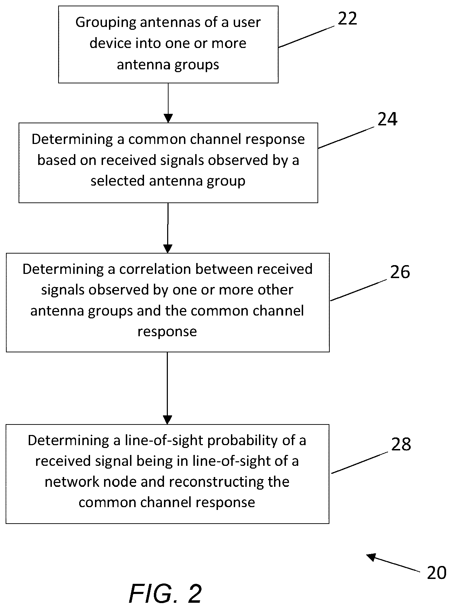

FIG. 2 is a flowchart of an algorithm, indicated generally by the reference numeral 20, in accordance with an example embodiment. The algorithm 20 may be performed by an apparatus (such as user device 11, or network node 12 (e.g. base station or transmission-reception point)) in a mobile communications system.

The algorithm 20 starts with operation 22 where antennas of a user device are grouped into one or more antenna groups. For example, the grouping may be performed based on at least one of the positioning of the antennas (e.g. geometry of the user device with relative positioning of antennas) on the user device and/or the network quality of the antennas (e.g. Quality of Service (QoS) requirements, such as accuracy, latency, or the like).

Next, at operation 24, a common channel response is determined based on received signals observed by a selected antenna group. A common channel may comprise a superimposed channel and the common channel response may be a superimposed channel response. The terms 'common channel response' and superimposed channel response' are used interchangeably throughout the description. The superimposed channel response may correspond to a superimposed channel (e.g. a superimposed channel) as experienced by antennas of the selected antenna group. The superimposed channel may fully or partially be observed by the remaining antenna groups (e.g. the non-selected antenna groups). For example, an antenna group may partially observe the superimposed channel when the antennas in the group observe a shifted version of the superimposed channel response, where the shift may be proportional to the distance of said antenna group from the selected antenna group. Alternatively, or in addition, an antenna group may partially observe the superimposed channel response as the channel may be pruned and/or attenuated, for example by some multipath components (e.g. taps) being attenuated and/or not appearing due to obstacles, but other multipath components being available. Alternatively, or in addition, an antenna group may exhibit multipath components that are correlated to multipath components of the superimposed channel response, where the correlation may be based on spatial correlation between the antenna groups.

At operation 26, a correlation may be determined between received signals observed by one or more other antenna groups and the determined common channel response. The correlation may comprise a combination between the common channel response and the received signal at each antenna of each antenna group. In some examples, the respective correlation is based, at least in part, on a distance between the selected antenna group and the respective other antenna group.

At operation 28, a line of sight probability is determined for the one or more antenna groups based at least partially on the correlation determined in operation 28. The line of sight (LOS) probability indicates the probability of a received signal, at a respective antenna group, being in line-of-sight of a network node. Further, based on the correlation, the common channel response may be reconstructed. Reconstruction of the common channel response may comprise updating channel vector(s) of the superimposed channel based on the determined correlation, which is described in further detail in the example embodiments below.

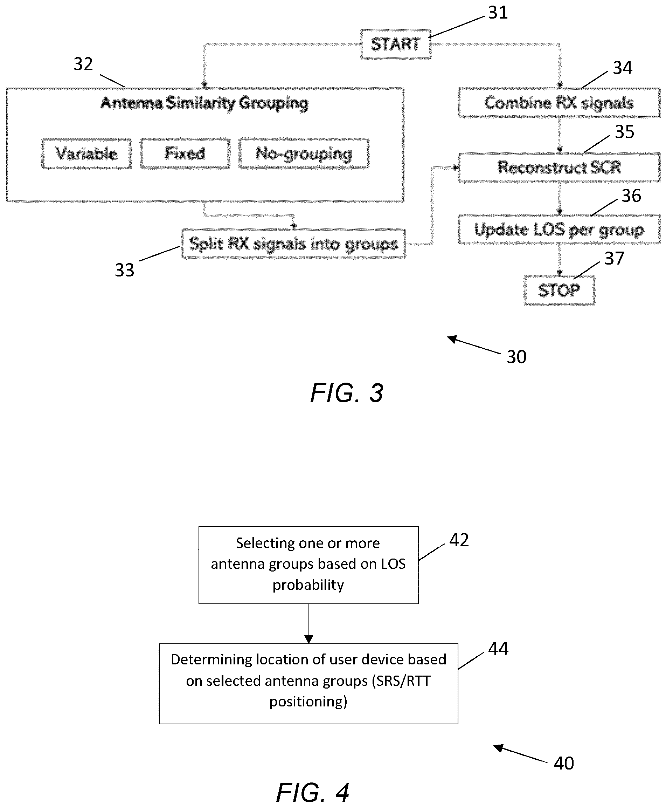

FIG. 3 is a flowchart of an algorithm, indicated generally by the reference numeral 30, in accordance with an example embodiment. Algorithm 30 starts at operation 31.

Initially, as shown by operation 34, received signals at a plurality of antennas of an antenna group at a user device (e.g. user device 11) may be combined (e.g. grouping received signals based on antenna grouping). For example, a superimposed channel response may be initialized based on the combined received signals. At time instance t, a transmission reception point (TRP) may transmit a positioning reference signal PRS signal s(t). The signal may arrive at antenna k = i:K of the target UE over a wireless channel, which maybe the initial superimposed channel response ($h_k(t)$) given by equation (1) below:

$$h_k(t) \; = \; \sum_{l=2}^{L} p_k(l) a_k(l) \delta\big(t - \tau(l)\big) \; (1),$$

Where:

- $a_k(l)$ and $\tau_k(l)$ are the complex gain and delay of the l-th multipath component at antenna k respectively.
- $p_k(l)$ is the probability that multipath component (tap) $l$ as seen by antenna $k$ is in line-of-sight.
- $\delta$ is a dirac delta function.

At operation 32, which may be performed in parallel with operation 34, or sequentially before or after operation 34, antenna grouping is performed (e.g. similar to operation 22 of algorithm 20 described in accordance to FIG. 2). For example, various types of grouping may be implemented based on similarity of antennas and/or based on power constraints of the user device. In one example, fixed grouping may be implemented, where each group has a predefined number (Z) of antennas (e.g. Z is fixed). In another example, variable size grouping may be implemented, where the number of antennas (Z) in each group may be different or similar (e.g. Z is variable; some groups may have higher number of antennas than other antenna groups, depending on form or type of antenna, and/or antenna geometry). In another example, grouping can be implemented such that each group only has one antenna (Z is set to 1).

In one example, the type of grouping may be based on one or more of user device power constraint evaluation, or antenna positioning Quality of Service (QoS) evaluation. For example, with respect to power constraint evaluation, *leveL_p(a)* is considered to be the best grouping type, whereas *level_p(b)* is considered to be the second best grouping type. With respect to positioning QoS evaluation, *level_q(a)* is considered to be the best grouping type, while *level_q(b)* is considered to be the second best grouping type. The level preferences of grouping type based on power and QoS evaluations may be combined as follows:

```
Function selectLevel(Leve_p. Level_q)
        Level = Min{level_p, Level_q}
        If Level == empty
                then Level = Level(O)
        Endif
End
```

Based on the above function, if the selected level is *level(o),* then grouping type may be selected to be one antenna per group (e.g. Z=i; no grouping); if the selected level is *level(1),* then the grouping type may be selected to be a fixed number of antennas per group (e.g. Z is predefined); and if the selected level is *level(2),* then the grouping type may be selected to be variable number of antennas per group (e.g. Z is variable).

Next, at operation 33, received signals at the various antennas of the user device may be separated based on the antenna grouping performed in operation 32. At operation 35, a superimposed channel response may be reconstructed based on a combination (correlation) of the combined received signals received from operation 34, and the received signals separated based on antenna groups. At operation 36, line of sight probability of each of the antenna groups may be updated based on the a combination (correlation) of the combined received signals received from operation 34, and the received signals separated based on antenna groups. The algorithm 30 may end at operation 37.

In one example, the common (superimposed) channel response corresponds to a superimposed channel vector observed at the selected antenna group (operation 35) comprising gains for one or more multipath components (for example, a gain of a multipath component may correspond to the received power of that multipath component at the user device). In one example, since the antenna geometry (i.e., distance between antennas and their correlation) may be known by the user device, the gain and delay at any antenna element k may be expressed as a function of the complex gain and delay at a reference antenna (say antenna 1) and the correlation coefficient $c_k$, and respectively distance $f_k$, between antenna $k$ and antenna $1$, i.e.:

-

$$a_k(l) = c_k a_1(l)$$

-

$$\tau_k(l) = \frac{f_k}{c} \tau_1(l)$$

where $a_k(l)$ and $\tau_k(l)$ are the complex gain and delay of the l-th multipath component at antenna k respectively.

The superimposed channel response (given by equation (1) above) may then be reconstructed as:

$$h_k(t) = p_k c_k a_1(1) \delta\big(t - \tau(1)\big) + c_k \sum_{l=2}^{L} a_1(l) \delta\left(t - \frac{f_k}{c} \tau_1(l)\right).$$

The received signal ($y_k$) at antenna k, after sampling at a resolution $T_s$, and cross-correlation with the known sequence s is given by equation (2) below:

$$y_k = c_k \Gamma_k P_k a + n_k = c_k \Gamma_k A p_k + n_k \quad (2)$$

where:

- $\Gamma(n,l) = \gamma(nT_s - \tau(l))$ is the known autocorrelation matrix of the transmit sequence s - this refers to one of the parameters of a model used for updating the gain vector of the superimposed channel

- $\Gamma_k(n,l) = \gamma\left(nT_s - \frac{f_k}{c} - \tau(l)\right)$ refers to one of the parameters of a model used for updating the gain vector of the superimposed channel

- $P_k = [p_k(1), ..., p_k(L)]^T \in \mathbf{R}^L$. ($p_k(l)$ is the probability that multipath component (tap) $l$ as seen by antenna k is in line-of-sight)

- $P_k = diag(p_k)$ is a matrix for the LOS probability at antenna k.

- $a = [a_1(1), ... a_1(L)]^T$ is the channel vector at the reference antenna containing the channel gains of all multipath components and A = diag(a). This channel will be referred to as super-channel gain henceforth.

- $\tau = [\tau_1(1), ... \tau_1(L)]^T$ is the delay vector at the reference antenna and is referred to as the super-channel delay vector.

- $n_k$ is additive white gaussian noise.

FIG. 4 is a flowchart of an algorithm, indicated generally by the reference numeral 40, in accordance with an example embodiment.

At operation 42, one or more first antenna groups may be selected (e.g. for SRS or RTT transmission) based on the LOS probability of the antenna groups determined with respect to algorithm 20 described in accordance with FIG. 2. In one example, selecting the one or more first antenna groups may comprise determining one or more second antenna groups having a line-of-sight probability of above a first threshold probability ($T_1$, where $T_1$ is UE specific or signalled by a location management function (LMF), e.g. via long-term evolution (LTE) positioning protocol (LPP) assistance data). Furthermore, one or more third antenna groups may be determined from the second antenna groups having channel energy above a second threshold channel energy ($T_2$ e.g., select group $g, |V_{(g)}\,\hat{\hat{a}}(l)|^2 > T_2)$ . Consequently, the first antenna groups are selected based on LOS probability and/or channel energy, such that the first antenna groups may comprise one or more of the second and/or third antenna groups.

Next, at operation 44, location of a user device (e.g. user device 11) may be determined by using the selected first one or more antenna groups for uplink sounding reference signal positioning and/or for round trip time positioning.

In one example, the uplink sounding reference signal positioning may be performed by transmitting uplink sounding reference signal (UL-SRS) using antenna(s) of the selected antenna group(s). The UL SRS transmission may further be based on SRS time-frequency code generation.

In one example, the LOS probability of antenna groups may be determined and/or updated based on the algorithm 20 and/or 30, and uplink sounding reference signal (UL SRS) transmission may be activated for antenna groups (or antennas) with highest LOS probability. For example, the above algorithms 20 and/or 30 may be used for determining LOS probability based on any available downlink signals, such as positioning reference signals (PRS) in case or round trip time (RTT) positioning, or any downlink reference signals (DL_RS) such as single side-band (SSB) signal, and/or channel status information reference signal (CSI-RS) that the user device (UE) may monitor for mobility and/or beam management purposes, such that the UE may leverage channel reciprocity principles.

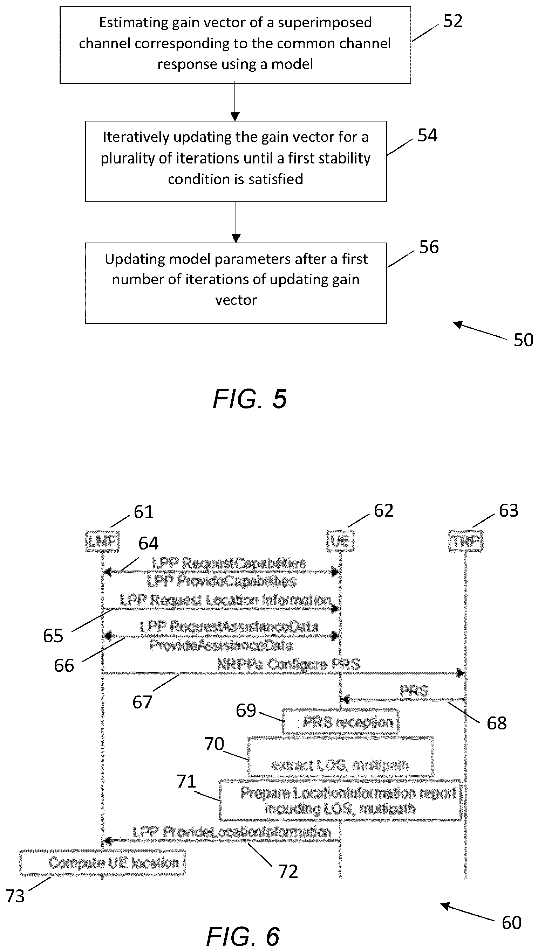

FIG. 5 is a flowchart of an algorithm, indicated generally by the reference numeral 50, in accordance with an example embodiment. In one example, reconstructing or updating the superimposed channel response (e.g. operation 28, 35 described with respect to FIGs. 2 and 3 above) may comprise using a model for estimating and/or updating gain vector of a superimposed channel corresponding to the superimposed channel response.

Algorithm 50 starts at operation 52, where gain vector of a superimposed channel corresponding to the superimposed channel response is estimated using a model (e.g. a machine learning model). The model may combine measurements of received signals observed by the one or more antenna groups of the user device.

At operation 54, the gain vector may be updated iteratively for a plurality of iterations until a first stability condition is satisfied. In one example, reconstructing of the superimposed channel response and updating LOS vectors may be performed repeatedly until satisfactory performance has been met (e.g. LOS vector updates have stabilized).

Next, at operation 56, parameters of said model may be updated after a first number of iterations of updating the gain vector. Therefore, every time the gain vector has been updated for the first number of iterations, the parameters of the model may be updated.

Updating the model parameters may assist in simplifying the superimposed channel reconstruction. Operation 56 may be optional.

FIG. 6 is a message sequence of an algorithm, indicated generally by the reference numeral 60, in accordance with an example embodiment. The algorithm 60 may be used for computing UE location using downlink (DL) LTE positioning protocol (e.g. processing downlink (DL) positioning reference signals (PRS) for enabling UE localization in DL LLP). The algorithm 60 shows a message sequence between a location management function (LMF) module 61, a user device (UE) 62, and a transmission reception point (TRP) 63. The algorithm 60 may start with the LMF 61 sending a message to the UE for requesting LTE positioning protocol (LPP) capabilities of the UE *(LPP RequestCapabilities),* and the UE 62 sending back the requested information to the LMF 61, as shown by the double sided arrow 64.

Next, as shown by arrow 65, the LMF 61 sends a message to the UE 62 requesting location information (LPP Request Location Information).

Next, as shown by arrow 66, LMF 61 requests assistance data from UE 62 (*LPP RequestAssistanceData),* and UE 62 sends requested assistance data (*ProvideAssistanceData)* to the LMF61.

Next, as shown by arrow 67, LMF 61 may send a message to TRP 63 in order to allow the UE 62 to be configured for positioning reference signal (PRS) under new radio positioning protocol A (NRPPa). Based on the message shown by arrow 67, TRP 62 sends a positioning reference signal (PRS) to the UE 62, as shown by arrow 68. The UE 62 then performs PRS reception at operation 69, and then may extract line of sight (LOS) information (e.g. for multipath components, such as LOS information or LOS probability of one or more antenna groups) at operation 70. Operation 70 may be performed based on algorithm 20 and/or 30 described with respect to FIGs. 2 or 3 respectively.

At operation 71, the UE 62 may then prepare a location information report that may comprise the location information (e.g. including LOS probability for one or more antenna groups for multipath components) extracted at operation 70. The location information may then be sent by the UE 62 to the LMF 61 (*LPP ProvideLocationInformation)* as shown by the arrow 72. Consequently, at operation 73, the LMF 61 computes location of the UE 62 based on the received location information.

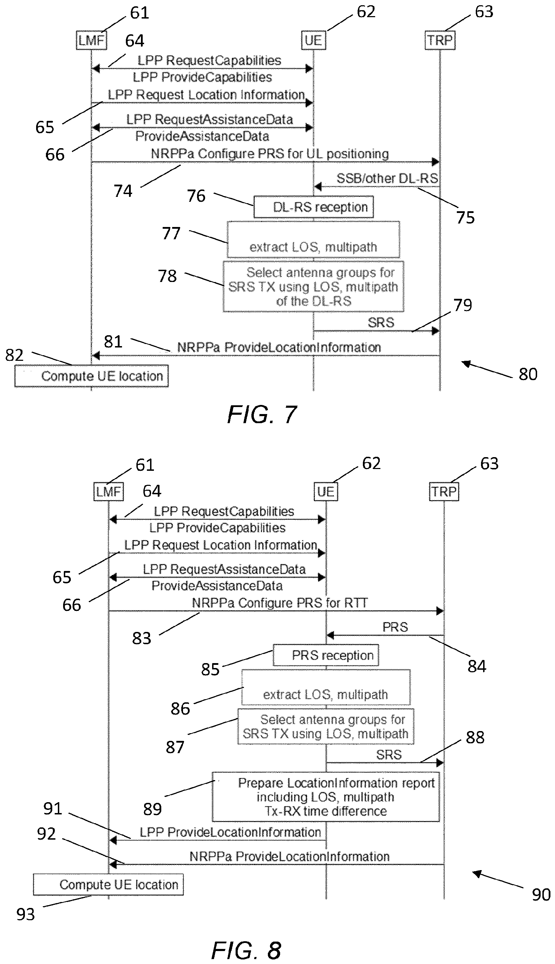

FIG. 7 is a message sequence of an algorithm, indicated generally by the reference numeral 80, in accordance with an example embodiment. The algorithm 80 may be used for computing UE location using uplink (UL) LTE positioning protocol (e.g. processing DL reference signals to enable the SRS configuration for a subsequent UL positioning session). Similar to algorithm 60, the algorithm 80 shows a message sequence between location management function (LMF) module 61, user device (UE) 62, and transmission reception point (TRP) 63.

The algorithm 80 comprises messages shown by arrows 64, 65, and 66, as described above for algorithm 60 with respect to FIG. 6.

Next, as shown by the arrow 74, LMF 61 may send a message to TRP 63 in order to allow the UE 62 to be configured for uplink (UL) positioning using a positioning reference signal (PRS) under new radio positioning protocol A (NRPPa). Based on the message shown by arrow 74, TRP 62 sends a configuration message (e.g. comprising a synchronization signal block (SSB) or other downlink reference signal (DL-RS)) to the UE 62, as shown by arrow 75. The UE 62 then performs downlink reference signal (DL-RS) reception at operation 76, and then may extract line of sight (LOS) information (e.g. for multipath components, such as LOS information or LOS probability of one or more antenna groups) at operation 77. Operation 77 may be performed based on algorithm 20 and/or 30 described with respect to FIGs. 2 or 3 respectively.

Next, at operation 78, the UE 62 selects antenna groups, for example, for sounding reference signal (SRS) transmission (TX) using the LOS information (e.g. including LOS probability for multipath components of the downlink reference signal (DL-RS). The UE 62 may then send a sounding reference signal based on the operation 78 to the TRP 63, as shown by arrow 79.

The location information may then be sent by the TRP63 to the LMF 61 (*NRPPa ProvideLocationInformation)* as shown by the arrow 81. Consequently, at operation 82, the LMF 61 computes location of the UE 62 based on the received location information.

FIG. 8 is a message sequence of an algorithm, indicated generally by the reference numeral 90, in accordance with an example embodiment. The algorithm 90 may be used for computing UE location using round trip time (RTT) LTE positioning protocol. Similar to algorithms 60 and 80, the algorithm 90 shows a message sequence between location management function (LMF) module 61, user device (UE) 62, and transmission reception point (TRP) 63.

The algorithm 90 comprises messages shown by arrows 64, 65, and 66, as described above for algorithms 60 and 80 with respect to FIGs. 6 and 7.

Next, as shown by the arrow 83, LMF 61 may send a message to TRP 63 in order to allow the UE 62 to be configured for RTT positioning using a positioning reference signal (PRS) under new radio positioning protocol A (NRPPa). Based on the message shown by arrow 83, TRP 62 sends a positioning reference signal to the UE 62, as shown by arrow 84. The UE 62 then performs PRS reception at operation 85, and then may extract line of sight (LOS) information (e.g. for multipath components, such as LOS information or LOS probability of one or more antenna groups) at operation 86. Operation 86 may be performed based on algorithm 20 and/or 30 described with respect to FIGs. 2 or 3 respectively.

Next, at operation 87, the UE 62 selects antenna groups, for example, for sounding reference signal (SRS) transmission (TX) using the LOS information (e.g. including LOS probability for multipath components of the downlink reference signal (DL-RS). The UE 62 may then send a sounding reference signal based on the operation 87 to the TRP 63, as shown by arrow 88.

At operation 89, the UE 62 may then prepare a location information report that may comprise the location information (e.g. including LOS probability for one or more antenna groups for multipath components) extracted at operation 86 and may also include multipath transmission-reception (Tx-Rx) time difference. The location information may then be sent by the UE 62 to the LMF 61 *(LPP ProvideLocationInformation)* as shown by the arrow 91. The TRP 63 may also send location information to the LMF 61 (*NRPPa ProvideLocationInformation)* as shown by the arrow 92. Consequently, at operation 93, the LMF 61 computes location of the UE 62 based on the received location information from the UE62 and the TRP 63.

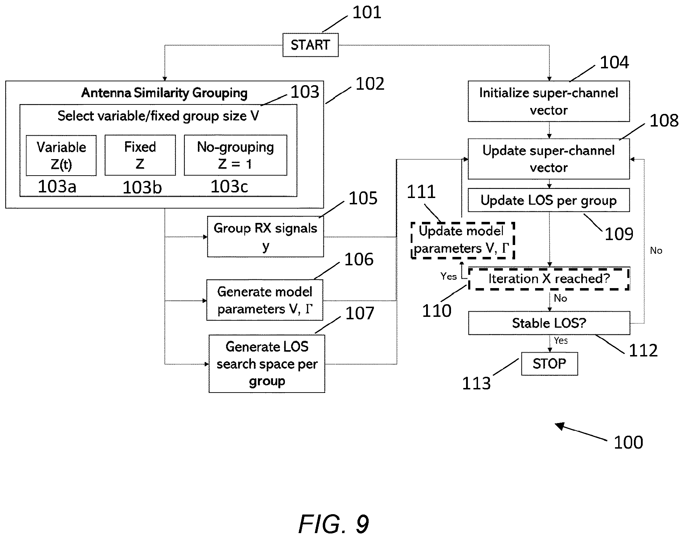

FIG. 9 is a flowchart of an algorithm, indicated generally by the reference numeral 100, in accordance with an example embodiment.

Algorithm 100 starts at operation 101, and then moves on to initialize a superimposed channel vector at operation 104, and to perform antenna grouping at operation 102. The operations 102 and 104 may be performed in parallel or sequentially.

For example, the initialized superimposed channel vector of operation 104 may comprise a channel vector at a reference antenna (e.g. an antenna corresponding to a selected antenna group of operation 24) containing channel gains of all multipath components (e.g. superimposed channel gain). The initialized superimposed channel vector may be given by $a = [a_1(1), ... a_1(L)]^T$.

The antenna grouping at operation 102 may be similar to operation 22 and 32 as described with reference to FIG. 2 and FIG. 3. As such, operation 102 may comprise operation 103 where a grouping type is selected from a variable grouping 103a (number of antennas in a group, Z(t), is variable), a fixed grouping 103b (number of antennas in a group, Z, is fixed), and no grouping 103c (number of antennas in a group, Z, is fixed to 1). As described earlier for operation 32, the grouping type may be selected based on one or more of user device power constraint evaluation, or antenna positioning Quality of Service (QoS) evaluation.

At operation 105, received signals at one or more antennas may be grouped based on the antenna grouping performed in operation 102. As described above for operation 34 with respect to FIG. 3, a received signal at antenna k, after sampling at a resolution $T_s$, may be given by the following equation (2) (same as the equation (2) provided above):

$$y_k = c_k \Gamma_k P_k a + n_k = c_k \Gamma_k A q_k + n_k \quad (2)$$

At operation 106, parameters of a model are generated, which model is used for updating the superimposed channel vector (e.g. gain vector for a superimposed channel). The parameters of the model may be as follows:

$$\Gamma(n,l) = \gamma\left(nT_s - \tau(l)\right)$$

$$\Gamma_k(n,l) = \gamma\left(nT_s - \frac{f_k}{c} - \tau(l)\right)$$

$$V = \begin{bmatrix} \Gamma_k P_1 \\ c_k \Gamma_k P_k \\ \ldots \\ c_K \Gamma_K P_K \end{bmatrix}, y = [y_1, \ldots, y_K]^T$$

In one example, gain vector of a superimposed channel corresponding to the superimposed channel response may be estimated using the model generated in operation 106. The model may combine measurements of received signals observed by the one or more antenna groups. It may be assumed that the delays lie on grid of fine resolution $d \ll T_s$, and selected length D, so that $Dd \geq \tau(L)$. Then, the approximated super-channel gain vector $\tilde{a}$ is expected to contain only a few non-zero multipath components. The estimation model may be given as shown in equations (3.a) and (3.b) provided below:

$$y_k \approx c_k \Gamma_k P_k \tilde{a} + n_k \quad (3.a)$$

$$y_k \approx c_k \Gamma_k \tilde{A} p_k + n_k \quad (3.b)$$

Where $\Gamma_k(n,l) = \gamma\left(nT_s - \frac{f_k}{c}\sigma_{2:K}(k) - ld\right)$, $\sigma_A(k)$ is the step function defined as $\sigma_A(k) = 1$ *if* $k \in A$ and o otherwise, and $\tilde{A} = diag(\tilde{a})$. To estimate the super-channel gain vector $\tilde{a}$, the samples from all antennas may be combined into a joint model ($y$) as shown by equation (4) below:

$$y \approx V\tilde{a} + n \quad (4)$$

The value of $\tilde{a}$ may be determined or estimated by enforcing sparsity constraints on the channel vector, as shown by equation (5) below:

$$\hat{\tilde{a}} = \operatorname{argmin}_{\tilde{a}} \left\|y - V\tilde{a}\right\|_2^2 \quad (5),$$

For example, the above equation may be solved using tools from compressed sensing, greedy algorithms e.g., orthogonal matching pursuit (OMP), supervised machine learning like neural networks with sparsity constraints, etc.

At operation 107, LOS probability is generated for each of the antenna groups (similar to operation 28 described with respect to FIG. 2).

In one example, determining and/or updating LOS probability in operation 107 may comprise estimating the probability of LOS vector, where in order to estimate the probability of LOS vector $p_k$ per antenna $k$ we may use the model (3.b) (described above) comprising isolating probability per multipath component (tap) 1: $y_k \approx c_k \Gamma_k(:,l)\tilde{a}(l)p_k(l) + n_k$, $l = 1: D$, $k = 1: K$.

In one example, in relatively smaller user devices (e.g. for smaller form factor user devices or UEs, such as handheld devices, robots, etc), it may be assumed that groups of antennas experience the same LOS. The antennas may be grouped according to each UEs (user device's) geometry, in groups of Z antennas, and instead of estimating K LOS probabilities (i.e., one per antenna), such that G = K/Z LOS probabilities (i.e., one per group) may be estimated.

In another example, in relatively large user devices (e.g., cars), the LOS probabilities across antennas may be independent i.e., each antenna may experience a LOS/NLOS irrespective of the conditions experienced by the other antennas. In such situation, we can estimate the LOS probability for each antenna, by decoupling the received signals and computing K independent LOS probability estimates as: $\widehat{p_k(l)} = \arg \min_{p_k(l)\in[0,1]} \left\| y_k - c_k \Gamma_k(:,l)\,\hat{\tilde{a}}(l)p_k(l) \right\|_2^2, k = 1: K$.

In an example embodiment, operations 108 and 109 may be performed sequentially until a certain convergence criterion is met. In one example, the operation 108 and/or 109 may be performed using a greedy method on model of operation 106 (e.g., matching pursuit (MP) and Newton search, after having updated the matrix V and respectively the vectors $v_{kl} = c_k\Gamma(:,l)\tilde{a}(l)$, $k = 1: K$, $l = 1:D$).

Outputs from operations 105 (grouped received signals), 106 (model parameters), and 107 (LOS probabilities) may be used in operation 108 for updating the superimposed channel vector.

At operation 109, LOS probabilities are updated based on the updated superimposed channel vectors, by updating LOS vectors. The LOS vectors may be updated depending on the antenna grouping, and may be given by equation (6) below:

$$\widehat{p_g(l)} = \arg \min_{p_g(l)\in[0,1]} \left\| y_{(g)} - V_{(g)}\,\hat{\tilde{a}}(l)p_g(l) \right\|_2^2, g = 1: G \quad (6).$$

where the operator $[\cdot]_{(g)}$ selects the rows of the vector/matrix corresponding to the g-th antenna group. In one example, The LOS probability given by the above equation 6 may be the LOS probability of a specific path (e.g. the *l-th* path) at a specific antenna group (*g-th* antenna group).

The updating of the superimposed channel vector at operation 108, and updating the LOS probability at operation 109 may be performed for a plurality of iterations until it is determined at operation 112 that a stability condition is satisfied. In one example, the stability condition may be satisfied based on whether the Hamming distance between the discretized LOS vectors of two consecutive iterations is smaller than a given threshold. This may indicate that a likely profile for each multipath component (tap) of each antenna group has been identified. In another example, additionally or alternatively, the stability condition may be satisfied based on whether the index associated with the highest LOS probability at each antenna group is constant between iterations. This may indicate that an optimal LOS component has been identified for the antenna group. The algorithm may stop at operation 113.

Operations 110 and 111 are optional features. For example, at operation 110, it may be determined whether a first number (X) of iterations of updating the superimposed channel vector has been performed. If it is determined that the first number of iterations is not reached, operation 112 is performed to check whether the stability condition is satisfied. If it is determined that a first number of iterations has been reached, model parameters, as determined in operation 106, may be updated. For example, the model parameters may be updated as follows: each channel multipath component (tap) *l* in each group *k*, for which the LOS probability $p_k(l)$ is smaller than a threshold (e.g., 20%), is removed from the model. This corresponds to removing the *l-th* column from each matrix $\Gamma_k$. The model parameters are subsequently updated and the next iteration of updates is performed. The updated model parameters are used in subsequent iterations of performing operation 108 to update the superimposed channel vectors. The algorithm may stop at operation 113.

The example embodiments described above allow utilization of geometrical characteristics (e.g. antenna positioning) of a user device (UE) for maximizing geometrical selectivity and utilizing only those antennas or antenna groups with higher LOS probability for transmitting SRS in UL positioning. The example embodiments allow grouping (e.g. classification) of UE antennas based on delay profile for optimized time resolution of timing-based DL or UL positioning methods.

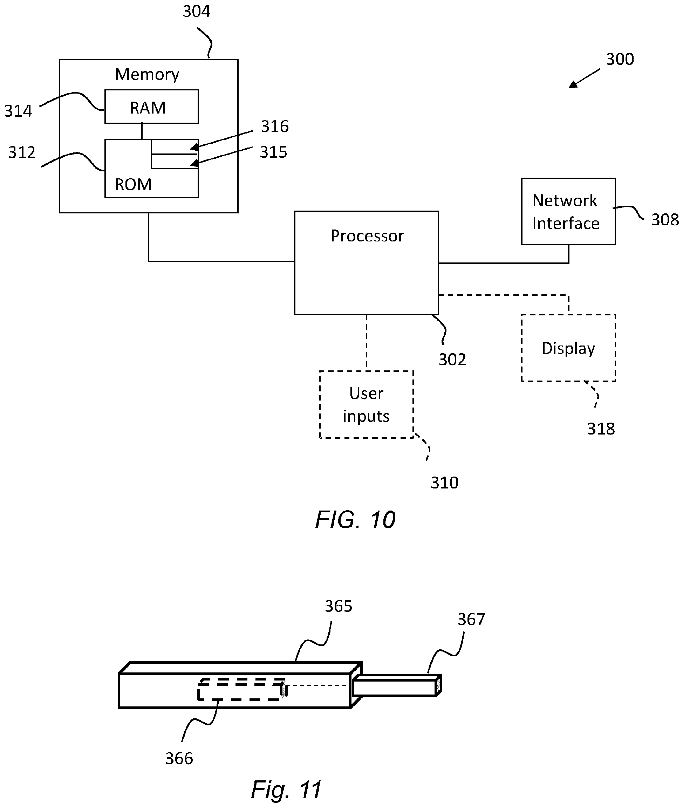

For completeness, FIG. 10 is a schematic diagram of components of one or more of the example embodiments described previously, which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network/apparatus interfaces 308 for connection to a network/apparatus, e.g. a modem which may be wired or wireless. Interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid-state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain computer program code which, when executed by the processor implements aspects of the algorithms 20, 30, 40, 50, 60, 80, 90, 100 described above. Note that in the case of small device/apparatus the memory can be most suitable for small size usage i.e. not always hard disk drive (HDD) or solid-state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 11 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow chart of Figures 2 to 5, 9, and message sequences 6 to 8 is an example only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

**Claims**

1. An apparatus in a mobile communications system comprising means for performing:

   grouping antennas of a user device of the mobile communications system into one or more antenna groups based on at least one of positioning and network quality of the antennas;
   determining a common channel response based on received signals observed by a selected antenna group;
   determining a correlation between received signals observed by one or more other antenna groups and the determined common channel response; and
   based at least partially on the correlation, determining a line-of sight probability of a received signal being in line-of-sight of a network node for the one or more antenna groups, and reconstructing the common channel response.

2. An apparatus as claimed in claim 1, further comprising means for determining location of the user device based, at least in part, on the determined one or more line-of-sight probabilities.

3. An apparatus as claimed in claim 1 or 2, wherein the respective correlation is based, at least in part, on a distance between the selected antenna group and the respective other antenna group.

4. An apparatus as claimed in any one of the preceding claims, wherein the common channel response corresponds to a superimposed channel observed at the selected antenna group comprising gains for one or more multipath components.

5. An apparatus as claimed in any one of the preceding claims, further comprising means for estimating gain vector of a superimposed channel corresponding to the common channel response using a model, wherein the model combines measurements of received signals observed by the one or more antenna groups.

6. An apparatus as claimed in claim 5, further comprising means for iteratively updating the gain vector for a plurality of iterations until a first stability condition is satisfied.

7. An apparatus as claimed in claim 6, further comprising means for updating parameters of said model after a first number of iterations of updating the gain vector.

8. An apparatus as claimed in any one of the preceding claims, further comprising means for selecting one or more first antenna groups for determining location of the user device using uplink sounding reference signal positioning and/or for round trip time positioning, wherein the selection is based, at least in part, on the determined line-of-sight probability of the one or more antenna groups.

9. An apparatus as claimed in claim 8, wherein selecting the first antenna group comprises:

   determining one or more second antenna groups having a line-of-sight probability of above a first threshold probability;
   determining the one or more third antenna groups from the second antenna groups having channel energy above a second threshold channel energy, wherein the first antenna groups comprise one or more of the third antenna groups.

10. An apparatus as claimed in any one of the preceding claims, wherein the means comprises at least one processor; and at least one memory including computer program code, the at least one memory and computer program code configured to, with the at least one processor, cause the performance of the apparatus.

11. A method performed in a mobile communications system comprising:

   grouping antennas of a user device of the mobile communications system into one or more antenna groups based on at least one of positioning and network quality of the antennas;
   determining a common channel response based on received signals observed by a selected antenna group;
   determining a correlation between received signals observed by one or more other antenna groups and the determined common channel response; and
   based at least partially on the correlation, determining a line-of sight probability of a received signal being in line-of-sight of a network node for the one or more antenna groups, and reconstructing the common channel response.

12. A method as claimed in claim 11, further comprising determining location of the user device based, at least in part, on the determined one or more line-of-sight probabilities.

13. A method as claimed in claim 11 or 12, further comprising selecting one or more first antenna groups for determining location of the user device using uplink sounding reference signal positioning and/or for round trip time positioning, wherein the selection is based, at least in part, on the determined line-of-sight probability of the one or more antenna groups.

14. A method as claimed in claim 13, wherein selecting the first antenna group comprises:

determining one or more second antenna groups having a line-of-sight probability of above a first threshold probability;
determining the one or more third antenna groups from the first antenna groups having channel energy above a second threshold channel energy, wherein the first antenna groups comprise one or more of the third antenna groups.

15. A computer program comprising instructions for causing an apparatus in a mobile communications system to perform at least the following:

grouping antennas of a user device of the mobile communications system into one or more antenna groups based on at least one of positioning and network quality of the antennas;
determining a common channel response based on received signals observed by a selected antenna group;
determining a correlation between received signals observed by one or more other antenna groups and the determined common channel response; and
based at least partially on the correlation, determining a line-of sight probability of a received signal being in line-of-sight of a network node for the one or more antenna groups, and reconstructing the common channel response.

*FIG. 1*

Grouping antennas of a user device into one or more antenna groups — 22

Determining a common channel response based on received signals observed by a selected antenna group — 24

Determining a correlation between received signals observed by one or more other antenna groups and the common channel response — 26

Determining a line-of-sight probability of a received signal being in line-of-sight of a network node and reconstructing the common channel response — 28

— 20

*FIG. 2*

31

START

32

Antenna Similarity Grouping

Variable    Fixed    No-grouping

34

Combine RX signals

35

Reconstruct SCR

36

Update LOS per group

Split RX signals into groups

33

37

STOP

30

*FIG. 3*

Selecting one or more
antenna groups based on LOS
probability

42

Determining location of user device based
on selected antenna groups (SRS/RTT
positioning)

44

40

*FIG. 4*

Estimating gain vector of a superimposed channel corresponding to the common channel response using a model /52

Iteratively updating the gain vector for a plurality of iterations until a first stability condition is satisfied /54

Updating model parameters after a first number of iterations of updating gain vector /56

50

## FIG. 5

61 LMF    62 UE    63 TRP

64
LPP RequestCapabilities
LPP ProvideCapabilities
LPP Request Location Information
LPP RequestAssistanceData
65
ProvideAssistanceData
66
NRPPa Configure PRS
67
PRS
68
69 PRS reception
70 extract LOS, multipath
71 Prepare LocationInformation report including LOS, multipath
LPP ProvideLocationInformation
72
Compute UE location
73

60

## FIG. 6

FIG. 7

FIG. 8

*FIG. 9*

*FIG. 10*

*Fig. 11*

Europäisches
Patentamt

European
Patent Office

Office européen
des brevets

# EUROPEAN SEARCH REPORT

**Application Number**

EP 22 16 9986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/229026 A1 (ERICSSON TELEFON AB L M [SE]) 18 November 2021 (2021-11-18) | 1-4,8-15 | INV.<br>H04B7/0404 |
| Y | * page 4, line 18 *<br>* page 6, line 27 *<br>* page 8, line 5 *<br>* page 36 – page 38; figures 1,2 *<br>* page 58, line 21 * | 5-7 | H04B7/08<br>H04B7/06<br>G01S5/02<br>H04L25/02<br>H04W64/00 |
| Y | US 2022/011396 A1 (KEATING RYAN [US] ET AL) 13 January 2022 (2022-01-13)<br>* paragraph [0100] – paragraph [0109]; figure 9 *<br>* paragraph [0118] *<br>* paragraphs [0007], [0050], [0051], [0081] * | 5-7 | |
| A | US 2022/113364 A1 (ZHOU YUHAN [US] ET AL) 14 April 2022 (2022-04-14)<br>* paragraph [0005] – paragraph [0010] *<br>* paragraph [0039] – paragraph [0043]; figure 3 *<br>* paragraph [0052] * | 1-15 | TECHNICAL FIELDS SEARCHED (IPC)<br><br>H04B |
| A | US 2021/048502 A1 (GUMMADI BAPINEEDU CHOWDARY [IN] ET AL) 18 February 2021 (2021-02-18)<br>* paragraphs [0060], [0063], [0094]; figure 7 * | 1-15 | |

The present search report has been drawn up for all claims

| Place of search | Date of completion of the search | Examiner |
|---|---|---|
| Munich | 29 September 2022 | Oana, Andrei |

EPO FORM 1503 03.82 (P04C01)

**EP 4 270 808 A1**

## ANNEX TO THE EUROPEAN SEARCH REPORT
## ON EUROPEAN PATENT APPLICATION NO.

EP 22 16 9986

29-09-2022

| Patent document cited in search report | | Publication date | Patent family member(s) | | Publication date |
|---|---|---|---|---|---|
| WO 2021229026 | A1 | 18-11-2021 | NONE | | |
| US 2022011396 | A1 | 13-01-2022 | EP | 3943963 A1 | 26-01-2022 |
| | | | US | 2022011396 A1 | 13-01-2022 |
| US 2022113364 | A1 | 14-04-2022 | CN | 114364013 A | 15-04-2022 |
| | | | EP | 3986042 A1 | 20-04-2022 |
| | | | KR | 20220048949 A | 20-04-2022 |
| | | | TW | 202218445 A | 01-05-2022 |
| | | | US | 2022113364 A1 | 14-04-2022 |
| US 2021048502 | A1 | 18-02-2021 | CN | 114223279 A | 22-03-2022 |
| | | | EP | 4014064 A1 | 22-06-2022 |
| | | | TW | 202114443 A | 01-04-2021 |
| | | | US | 2021048502 A1 | 18-02-2021 |
| | | | WO | 2021030712 A1 | 18-02-2021 |

EPO FORM P0459